Europäisches Patentamt

European Patent Office

Office européen des brevets

(19)

(11) Numéro de publication : **0 494 018 A1**

## (12) DEMANDE DE BREVET EUROPEEN

(21) Numéro de dépôt : **91403545.6**

(22) Date de dépôt : **26.12.91**

(51) Int. Cl.$^5$ : **H04L 12/42**

(30) Priorité : **02.01.91 FR 9100010**

(43) Date de publication de la demande :
**08.07.92 Bulletin 92/28**

(84) Etats contractants désignés :
**DE FR GB IT SE**

(71) Demandeur : **ALCATEL ESPACE**
**11, avenue Dubonnet**
**F-92407 Courbevoie Cédex (FR)**

(72) Inventeur : **Marsy, Jean-Marie**
**25, rue du Rhône**
**F-31170 Tournefeuille (FR)**
Inventeur : **Legall, Jean-Yves**
**"Le Chalet"à Lafitte-Vigordane**
**F-31390 Carbonne (FR)**

(74) Mandataire : **Weinmiller, Jürgen et al**
**Lennéstrasse 9 Postfach 24**
**W-8133 Feldafing (DE)**

(54) Installation, embarquée sur un satellite, de collectage numérique de données.

(57) Installation, embarquée sur un satellite, de collectage des données établies et mémorisées par des instruments de prise d'informations (I5 à I1).

Le collectage de ces données s'effectue en série, selon une boucle (1) partant et revenant au multiplexeur (16), qui comporte en conséquence un générateur (2) de trames (3) aptes à recevoir ces données.

FIG.2

EP 0 494 018 A1

La présente invention se rapporte à une installation embarquée sur un satellite, de collectage numérique de données

Un satellite est normalement équipé d'un certain nombre d'instruments, tels que des instruments optiques, des instruments radar, ou autres, qui par exemple mesurent des phénomènes physiques et transcrivent ces grandeurs sous forme de données numériques classiquement constituées par des suites de bits. Cependant, certains instruments élaborent, dans un intervalle de temps donné par exemple, un grand nombre de bits de mesure, tandis que d'autres en élaborent, dans ce même intervalle de temps, un nombre bien plus restreint.

En d'autres termes, les débits d'informations diffèrent, dans des proportions pouvant être importantes, selon les instruments.

Ces informations n'ont en outre généralement aucune raison d'être en synchronisme les unes par rapport aux autres.

Par ailleurs, les suites binaires issues de ces différents instruments de mesure doivent être "formattées", c'est à dire que l'on doit associer à par exemple une série de 8000 bits représentatifs d'une information de mesure, des bits placés en tête et permettant en particulier aux stations terriennes qui reçoivent ensuite ces informations de mesure d'identifier l'origine de ces suites binaires. Par exemple, il est prévu un nombre determiné de bits d'identification de l'instrument de mesure qui est à l'origine de la suite binaire, quelques autres bits pour indiquer la longueur de cette suite binaire, d'autres bits pour identifier le satellite d'où provient cette mesure, etc...

Dans le satellite est réalisé un multiplexage, ou concaténation, de ces différentes suites binaires, de manière à réaliser leur mise en série pour émission immédiate ou ultérieure, ainsi que leur aiguillage vers différentes interfaces de sortie vers par exemple différents émetteurs radioélectriques et/ou différents dispositifs d'enregistrement.

Le multiplexage d'informations d'instruments de débits différents et asynchrones peut conduire dans le cas de nombreux instruments à des capacités de stockage très importantes et/ou à des débits binaires considérables à l'intérieur du multiplexeur. Ces capacités de stockage et débits binaires peuvent être incompatibles avec les contraintes de fiabilité et de qualité de liaison qui caractérisent les missions spatiales.

Le processus habituellement utilisé pour minimiser les capacités de stockage et les débits binaires internes consiste à définir à l'intérieur du multiplexeur une séquence d'interrogation des différents instruments en fonction des différents débits d'entrée et de sortie et à transférer les données de chaque instrument directement vers le multiplexeur selon cette séquence.

Un tel processus présente l'inconvénient de nécessiter un grand nombre de liaisons électriques entre chaque source et le multiplexeur.

En effet, il faut compter entre chaque source et le multiplexeur au moins 4 paires de fils :
– une paire pour les données proprement dites
– une paire pour l'horloge accompagnant les données
– une paire pour le signal de synchronisation accompagnant les données
– une paire pour le signal d'autorisation de transfert émis par le multiplexeur.

Ces quatre paires doivent être multipliées par le nombre d'instruments nominaux et redondants et par deux encore si une redondance "croisée" est nécessaire entre les instruments et le multiplexeur nominal et redondant.

Un autre inconvénient de ce processus réside dans le fait qu'en cas d'augmentation du nombre d'instruments, le multiplexeur voit non seulement sa séquence d'interrogation modifiée, ce qui n'est pas gênant puisqu'elle peut être programmable, mais aussi le nombre de ses circuits d'interface, ce qui est plus gênant puisqu'il s'agit d'une modification de matériel.

L'invention vise à remédier à ces inconvénients. Elle se rapporte à cet effet à une installation, embarquée sur un satellite, de collectage numérique de données, cette installation comportant un automate de multiplexage, ou "multiplexeur", apte à au moins générer une série de trames vides de bits de données, chaque trame passant successivement dans les circuits d'interface de sortie des organes de prise d'informations (mesures, prétraitements de données enregistrées,...) et de mise sous forme numérique qui équipent ce satellite et dont on désire collecter les données, de façon à pouvoir être au moins partiellement remplie par les données bien accumulées par un de ces organes de mesure, et pré-formattées, ce dernier étant soit affecté à l'avance à cette trame vide soit, en l'absence de telles affectations spécifiques, reconnaissant sa possibilité de transfert de ses données dans cette trame, de sorte que le collectage des données des différents organes de prise d'informations s'effectue "en boucle", les trames en sortie du dernier organe de cette boucle étant réintroduites dans le multiplexeur où elles sont triées, définitivement formattées, et aiguillées vers différentes interfaces de sortie.

De toute façon, l'invention sera bien comprise, et ses avantages et autres caractéristiques ressortiront, lors de la description suivante d'un exemple non limitatif de réalisation, en référence au dessin schématique annexé dans lequel :

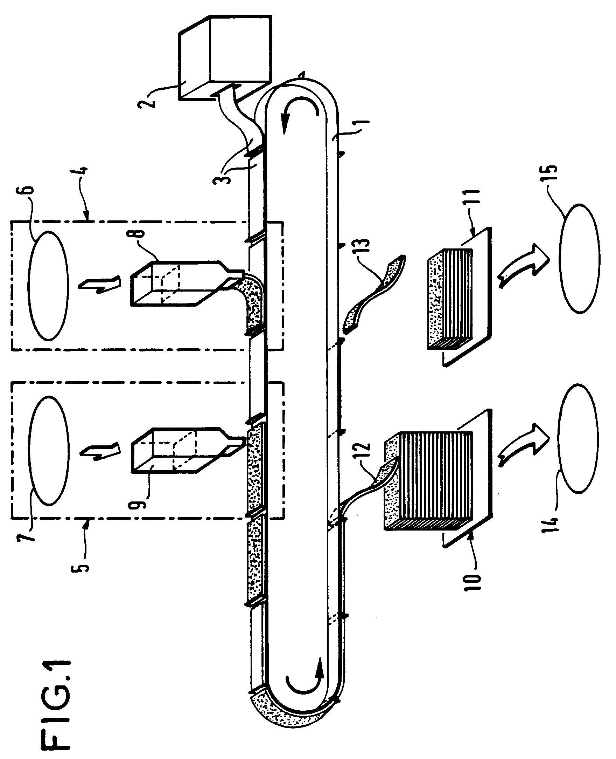

. Figure 1 est une simulation mécanique élémentaire destinée à la rapide compréhension du moyen général de l'invention ; et

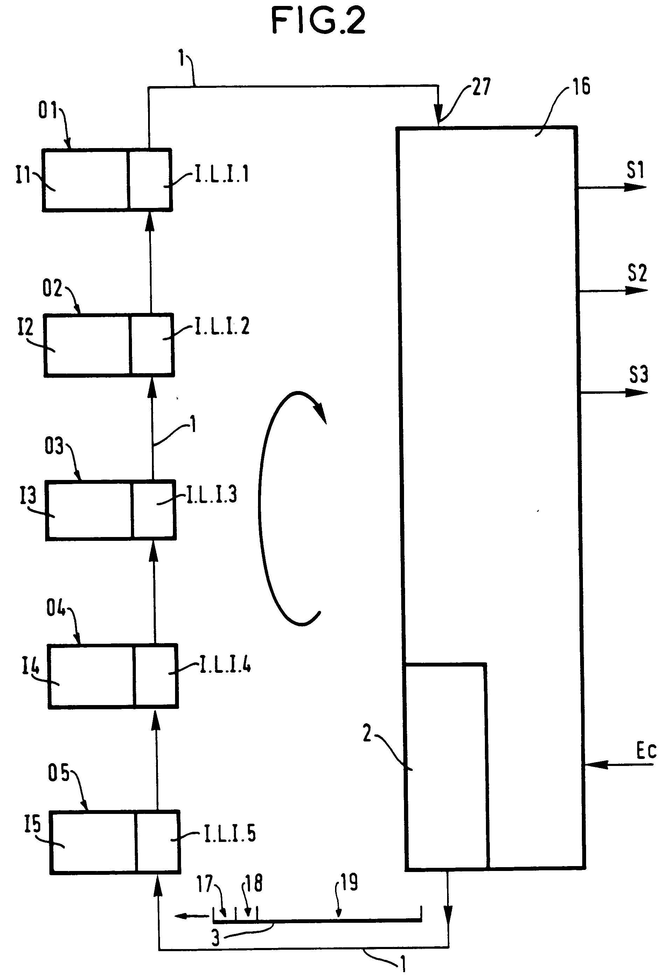

. Figure 2 est un synoptique d'ensemble de cette installation de collectage de données pour satellite.

La figure 1 est une analogie mécanique permettant une facile compréhension du principe général de fonctionnement de cette installation.

Le dispositif de collecte de données représenté sur cette figure 1 comporte un tapis sans-fin 1. En amont, un générateur de trames vides 2, faisant partie du multiplexeur, dépose, les unes à la suite des autres, des trames vides 3 de longueur déterminée (de longueur fixe dans cet exemple) sur le tapis sans-fin 1.

Ce tapis 1 passe successivement à travers les organes 4 et 5 de prise d'informations (mesures, prétraitement de données enregistrées, etc...) du satellite. Ce faisant, les données élaborées par chaque instrument (de mesure ou autre) 6,7 sont accumulées dans les mémoires des circuits d'interface 8,9 avec le tapis sans-fin 1.

Chaque interface 8,9 scrute les trames 3 passant sur le tapis sans-fin 1, et fonctionne selon l'algorithme suivant :

"SI : la mémoire du circuit d'interface considéré, 8 ou 9, contient au moins de quoi remplir une trame 3 du tapis 1,

ET : si cette trame 3 est vide,

ALORS : les n bits de cette trame vide sont remplis par les n premiers bits de cette mémoire, ces bits comprenant un identificateur de l'organe de mesure, 4 ou 5, qui est placé dans l'entête de la trame.

SINON : on attend la trame suivante."

En aval, des dispositifs de tri 10,11 faisant partie du multiplexeur prélèvent les contenus 12,13 de ces trames ainsi remplies et les aiguillent vers différents circuits de sortie 14,15 selon des instructions stockées dans leurs mémoires et en fonction des identificateurs précités des organes de mesure 4,5.

L'installation réelle qui est schématisée en Figure 2 fonctionne selon ce principe général, mais elle comporte toutefois quelques avantageux perfectionnements comme on le verra maintenant.

Sur cette figure 2, on a désigné par la référence 16 l'automate numérique de multiplexage, ou multiplexeur, qui équipe le satellite, et qui possède des sorties S1,S2,S3 sur les interfaces de sortie vers des émetteurs radioélectriques ou des organes de stockage. Dans cet exemple de réalisation, il est aussi prévu une entrée Ec de données de commande des instruments qui proviennent d'un module de commande non représenté.

Ce multiplexeur, ou "HSM", 16 possède un générateur de trames 2, dit "Time Slots Generator", qui fournit sur sa sortie 1 une série de trames 3, vides ou non, et comportant au minimum chacune, comme représenté :

. une première petite série de bits 17, qui sont des bits "de synchronisation" indiquant l'arrivée de la trame 3 ;

. puis une autre petite série de bits 18 d'identification de cette trame, indiquant par exemple :

– si cette trame est vide ou non,

– l'adresse de l'organe de mesure ou autre auquel elle est destinée,

– si elle est destinée à être lue par cet organe de mesure (cas où elle contient des données de commande provenant de l'entrée Ec), ou au contraire si elle est destinée à recevoir des bits de mesure (cas d'une trame vide),

– éventuellement, dans le cas plus complexe où toutes les trames 3 ne sont pas de même longueur, la longueur de la trame ;

. enfin un espace 19, soit vide soit au moins partiellement rempli de bits de données de commande, apte à recevoir, ou contenant, des bits de données.

Comme c'est un peu le cas pour la simulation de la figure 1, ces trames 3 passent toutes successivement et en série à travers des organes de prise d'information, constitués par exemple ici par des organes de mesure, O5 à O1, qui comportent tous un instrument de mesure proprement dit, I5 à I1, suivi d'une interface de boucle I1.L.I.5 à I.L.I.1, remplissant les fonctions suivantes :

. scrutation des trames 3 qui la traversent ;

. mémoire-tampon ("buffer") pour les données numériques qui sont élaborées par son instrument de mesure et qui lui sont transmises par celui-ci ;

. transfert éventuel de ces données dans la trame 3 qui la traverse ;

. formattage de ces mêmes données (indication du nombre de bits, etc ) ;

. transfert éventuel des données de commande contenues dans la trame 3 vers son instrument de mesure.

Comme on le voit au dessin, ce sont ces interfaces I.L.I.5 à I.L.I.1 qui sont traversées en série par ces trames, la paire 1 en sortie de la dernière interface I.L.I.1 entrant à nouveau en 27 dans le multiplexeur 16, complétant ainsi la boucle.

Au point 27 sont donc introduites :

. soit des trames vides, qui sont soit les trames contenant à l'origine des données de commandes qui ont été, en cours de parcours de la boucle tranférées à l'instrument auquel elles étaient destinées, soit des trames vides à l'origine, et qui n'ont pu être remplies par l'instrument dont elles portent l'adresse, pour la simple raison que la mémoire d'interface de cet instrument n'avait pas accumulé, lors de leur passage, un nombre suffisant de bits;

. soit des trames pleines contenant des données de mesure en provenance des instruments.

Le multiplexeur 16 traite alors cette série de trames de la façon suivante :

. les trames vides sont supprimées;

. les bits de synchronisation désormais inutiles (bits de la partie 17 par exemple) sont supprimés;

. les trames pleines sont correctement formattées en vue de leur transmission vers les interfaces de sortie;

. ces mêmes trames sont triées, mémorisées ("bufférisées"), et dirigées vers une sortie prédeterminée S1 à S3 selon des critères prédéfinis.

A noter que la transmission des données dans la liaison de boucle 1 peut utiliser des liaisons classiques comprenant une paire (ou câble) pour les données, une paire pour l'horloge, et une paire pour la synchronisation de trame, mais il peut être préférentiellement envisagé d'utiliser une seule et même paire (ou câble) pour les données, l'horloge et la synchronisation, en codant les données de mesure à l'aide d'un code permettant une récupération facile du rythme sans augmenter considérablement la longueur du spectre du signal, tel que par exemple un code "4 bits/5 bits" qui comprend des symboles spécifiques distincts de ceux utilisés pour les données et qui peuvent être utilisés pour la synchronisation des trames.

A noter que l'accroissement du nombre d'instruments connectés au multiplexeur 16 n'a aucun impact sur les circuits de celui-ci : seules sont à modifier les programmations des mémoires qu'il contient.

Par ailleurs, la répartition temporelle des trames 3 associées à chaque instrument est choisie de manière à "lisser" non seulement le flux de données de chaque instrument vers la boucle 1, mais aussi le flux de données de cette boucle vers chaque circuit de sortie S1 à S3. Ceci permet une optimisation de la taille des différentes mémoires-tampon. Cette répartition temporelle des trames 3 associées à chaque instrument se fait grâce aux bits d'identification 18.

Comme il va de soi, l'invention n'est pas limitée à l'exemple de réalisation qui vient d'être décrit en référence à la figure 2. Il peut par exemple être prévu une transmission parallèle de plusieurs bits sur le "tapis" de boucle 1. La longueur des trames 3 peut différer selon les instruments auxquels elles sont destinées. Si cette longueur est fixe, elles peuvent (à l'instar de la simulation selon Figure 1) ne pas comporter d'octet d'identification des instruments, les instruments de plus haut débit étant alors préférentiellement placés en amont sur la boucle, etc...

## Revendications

1/ Installation, embarquée sur un satellite équipé d'un certain nombre d'organes (05 à 01) de prise d'information et de mise sous forme numérique, de collectage numérique de données issues de ces différents organes, cette installation comportant un automate de multiplexage (16) ou "multiplexeur" apte à au moins générer une série de trames (3) vides de bits de données ayant, ou non, en tête un identificateur correspondant à un de ces organes, chaque trame passant successivement dans les circuits d'interface de sortie de ces organes, de façon à pouvoir être au moins partiellement remplie par les données bien accumulées par un des ces organes, et préformatées, cet organe étant soit affecté à l'avance à cette trame vide (3) grâce à l'identificateur placé par le multiplexeur soit, en l'absence de telles affectations spécifiques, reconnaissant sa possibilité de transfert de ses données dans cette trame et plaçant lui-même en tête de trame son propre identificateur de sorte que le collectage des données des différents organes (05 à 01) s'effectue selon une boucle (1), les trames en sortie du dernier organe (01) de cette boucle étant réintroduites dans le multiplexeur où elles sont triées, définitivement formatées, et aiguillées vers différentes interfaces de sortie (S1, S2, S3) vers des émetteurs radioélectriques et/ou des organes de stockage, selon des instructions stockées dans leurs mémoires, et en fonction des identificateurs des organes placés dans les entêtes des trames, ces opérations de triage, formatage et aiguillage vers les interfaces de sortie pouvant aussi être elles mêmes délocalisées à l'aide d'organes récepteurs scrutant la boucle et ne prélevant que les trames dont les identificateurs correspondent à ceux qu'ils ont en mémoire.

2/ Installation de collectage de données selon la revendication 1, caractérisée en ce que ces données sont transférées sur la boucle (1) après avoir été codées par un code permettant d'y inclure des indications de rythme et/ou de synchronisation.

3/ Installation selon la revendication 1, caractérisée en ce que ce code est un code "4 bits/5 bits".

**4/** Installation selon l'une des revendications 1 à 3, caractérisée en ce que son multiplexeur (16) comporte une entrée de données de commande pour les instruments de prise d'informations (I5 à I1), en ce que ce multiplexeur (16) est apte à générer sur la boucle (1) des trames (3) contenant ces données de commande et leur adresse, et en ce que les interfaces (I.L.I.5 à I.L.I.1) des organes de prise d'informations (05 à 01) sont aptes à transmettre ces données de commande aux instruments correspondants (I5 à I1).

**5/** Installation selon l'une des revendications 1 à 4, caractérisée en ce que, ledit multiplexeur étant prévu pour générer des trames vides (3) réceptrices de données et toutes de même longueur, les instruments (I5, I4....) de plus haut débit sont placés en amont de la boucle (1).

FIG.1

# FIG.2

Office européen
des brevets

**RAPPORT DE RECHERCHE EUROPEENNE**

Numero de la demande

EP 91 40 3545

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | US-A-3 755 786 (DIXON)<br>* colonne 1, ligne 49 - colonne 2, ligne 20 *<br>* colonne 4, ligne 24 - ligne 42; figures 1,4,5 * | 1,4,5 | H04L12/42 |
| Y | US-A-3 904 829 (MARTIN)<br>* colonne 4, ligne 26 - ligne 52; figures 1,2 *<br>* colonne 1, ligne 51 - colonne 2, ligne 27 * | 1,4,5 | |
| A | GB-A-2 111 271 (SEIKOSHA)<br>* page 1, ligne 83 - ligne 119 *<br>* page 2, ligne 54 - ligne 120 * | 1-5 | |
| A | DATAMATION.<br>vol. 21, no. 2, Février 1975, BARRINGTON US<br>pages 51 - 56;<br>G.FRASER: 'A virtual channel network'<br>* figure 2 * | 1-5 | |
| A | EP-A-0 124 959 (SPERRY)<br>* page 6, ligne 7 - ligne 29; figure 3 * | 1-3 | |
| | | | **DOMAINES TECHNIQUES RECHERCHES (Int. Cl.5)**<br><br>H04L<br>H04Q |

Le présent rapport a été établi pour toutes les revendications

| Lieu de la recherche | Date d'achèvement de la recherche | Examinateur |
|---|---|---|
| LA HAYE | 06 MARS 1992 | DE LA FUENTE DELAGUA |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)